(19) Europäisches Patentamt

European Patent Office

Office européen des brevets

(11) EP 0 841 534 A2

(12) **EUROPÄISCHE PATENTANMELDUNG**

(43) Veröffentlichungstag:
13.05.1998 Patentblatt 1998/20

(51) Int. Cl.⁶: G01C 11/02

(21) Anmeldenummer: 97117792.8

(22) Anmeldetag: 14.10.1997

(84) Benannte Vertragsstaaten:
AT BE CH DE DK ES FI FR GB GR IE IT LI LU MC
NL PT SE
Benannte Erstreckungsstaaten:
AL LT LV RO SI

(30) Priorität: 07.11.1996 DE 19645981

(71) Anmelder:
Ingenieurbüro für Elektro-Mechanische
Technologien Dipl.-Ing. Hartmut Euer
D-82377 Penzberg (DE)

(72) Erfinder:
Wernicke, Joachim, Dr.-Ing.
14167 Berlin (DE)

(74) Vertreter:
Kern, Wolfgang, Dipl.-Ing.
Patentanwälte Kern, Brehm & Partner GbR,
Albert-Rosshaupter-Strasse 73
81369 München (DE)

(54) **Vorrichtung zum Erzeugen kartennormierter Bilder**

(57) Bei mit Hilfe von einer an einem Fluggerät installierten Kamera aufgenommenen Bildern bereitet deren Zuordnung zur Landkartenausschnitten häufig Schwierigkeiten. Bei Verwendung mehrerer Kameras ist es schwierig, die dargestellten Details in ihren unterschiedlichen Größenverhältnissen zueinander in Relation zu setzen und einander zuzuordnen. Mit Hilfe der neuen Vorrichtung ist das Erzeugen kartennominierter Bilder möglich.

Die erfindungsgemäße Vorrichtung (14) weist ein Schreib-Adreßwerk (24) zum Erzeugen eines Einschreibtaktes (25), einen Bildspeicher (27), in den die aufgenommene Bildinformation einschreibbar ist, ein Auslese-Adreßwerk (30) zum Auslesen der Bildinformation mittels eines ein geometrisch verändertes Ausleseraster aufweisenden Lesetaktes (32) und einen Signalwandler (34) zum Umwandeln der ausgelesenen Bildinformation (33) in ein das kartennormierte Bild darstellendes Signal (35) auf. Bei Verwendung mehrerer Kameras ist zusätzlich eine Synchronisierungs- und Skalierungseinrichtung (22) vorgesehen.

Herstellen kartennormierter Bilder, Erreichen einer Kartendeckung zwischen aufgenommenen Luftbildern und Ausschnitten einer Landkarte.

Fig. 2

**Beschreibung**

Die Erfindung bezieht sich auf eine Vorrichtung zum Erzeugen kartennormierter, mittels wenigstens einer elektronischen Kamera, insbesondere einer Videokamera, aufgenommener Bilder nach dem Oberbegriff des Anspruchs 1.

Eine solche Vorrichtung findet vorzugsweise im Bereich der unbemannten Beobachtungsfluggeräte, zum Beispiel bei Beobachtungsdrohnen, Verwendung.

Unbemannte, mit elektronischen Videokameras unterschiedlicher Spektalbereiche bestückte Fluggeräte werden beispielsweise zur zivilen und militärischen Überwachung von Geländen eingesetzt. Die Kameras können das sichtbare Spektrum in schwarz-weiß oder in Farbe, das nahe Infrarotspektrum sowie das ferne Infrarotspektrum abdecken. Letztere Kameras werden Wärmebildkameras genannt. Jedes dieser Fluggeräte weist eine oder mehrere solcher Kameras auf Diese sind ortsfest gegenüber dem Fluggerät oder relativ zu diesem angeordnet. Die Brennweiten der Objektive der Kameras sind entweder konstant (Fixfokus-Objektive) oder verstellbar (Vario-Objektive).

Derartige Fluggeräte liefern detailreiche Bilder sowohl über für das menschliche Auge sichtbare als auch mit bloßem Auge nicht sichtbare Gegebenheiten. Letztere umfassen beispielsweise deutliche Temperaturverteilungen in Form von Wärmebildern oder eine im Chlorophyllgehalt veränderte Vegetation in Folge einer Reflexion im nahen Infrarotbereich.

Die bekannten Vorrichtungen sind insofern nachteilig, als die Zuordnung der jeweiligen Bilder zu einem speziellen Landkartenausschnitt Schwierigkeiten bereitet, da die Blickrichtung der Kameras auf Grund der von der Flugbahn abhängigen Bewegung des Fluggerätes veränderlich ist. Ein Beobachter mußte also Bildverzeichnungen in Folge einer Schrägsicht gedanklich rückgängig machen und sich über seine Blickrichtung im klaren sein. Bei Verwendung von mehreren Kameras mit unterschiedlichen Bildöffnungswinkeln bereitet es ferner für einen Beobachter große Schwierigkeiten, die dargestellten Aufnahmedetails in ihren unterschiedlichen Größenverhältnissen zueinander in Relation zu setzen und einander zuzuordnen.

Der Erfindung liegt die Aufgabe zugrunde, eine Vorrichtung der eingangs erwähnten Art zu schaffen, mit deren Hilfe ein kartennormiertes Bild auch bei spektral unterschiedlichen Kameras herstellbar ist.

Diese Aufgabe wird erfindungsgemäß durch eine Vorrichtung mit den Merkmalen des Anspruchs 1 gelöst.

Mit Hilfe des von dem Schreib-Adreßwerk erzeugten Einschreibtaktes ist die von der Kamera aufgenommene Bildinformation auf einfache Weise in den Bildspeicher einschreibbar. In dem als Prozeßrechner ausgestalteten Auslese-Adreßwerk sind die Randbedingungen während der Aufnahme, also insbesondere der Signaltakt, die Raumlage und der Schwenkwinkel der Kamera, berücksichtigt, so daß in Abhängigkeit dieser Größen ein Lesetakt herstellbar ist, welcher im Vergleich zu dem Abtastraster der angegebenen Bildinformation ein geometrisch verändertes Ausleseraster aufweist. Das geometrisch veränderte Ausleseraster des Lesetaktes wird mittels eines Signalwandlers in das gesuchte kartennormierte Bild umgewandelt.

Vorteilhafterweise sind die Bilder Videobilder und Abtastraster sowie Ausleseraster zeilenförmige Fernsehraster. Dadurch können zum Aufnehmen der gewünschten Bilder elektronische Kameras in Form von Videokameras bzw. Fernsehkameras eingesetzt werden.

Gemäß einer Weiterbildung der Erfindung ist der Bildspeicher ein analoger optoelektronischer Bildspeicher, vorzugsweise ein Bildwandler oder Fernseh-Normwandler, oder ein digitaler elektronischer Bildspeicher, wobei das Einschreiben und Auslesen der Bildinformation im Falle des analogen Bildspeichers durch Elektronenstrahlen, die durch elektronische oder elektromagnetische Ablenkung gemäß den Abtast- und Ausleserastern geführt sind, und im Falle des digitalen Bildspeichers gemäß mathematischer Adreßoperationen erfolgt. Dadurch ist es möglich, das Einlesen der Bildinformation gemäß dem Fernsehraster in gleichmäßig-systematischer Weise vorzunehmen. Beim Auslesen sind Rastenveränderungen auf Grund der aktuellen geometrischen Konfigurationen in Abhängigkeit eines zeitlichen Adressierungsablaufs berücksichtigt. Vorteilhafterweise erfolgen die vorgenannten mathematischen Adressoperationen durch elektronisch-digitale Einrichtungen.

Vorteilhafterweise ist die wenigstens eine Kamera an einem Fluggerät, vorzugsweise an einer unbemannten Beobachtungsdrohne; angebracht, sind die Bilder Luftbilder und erfolgt das Auslesen der Bildinformation unter Berücksichtigung der Raumlage des Fluggerätes, insbesondere des Azimut-, Nick- und Rollwinkels, der Schwenkwinkel, insbesondere des Längs- und Querwinkels, der wenigstens einen Kamera relativ zum Fluggerät sowie der geodätischen Koordinaten des Ortes des Fluggerätes und der Höhe des Lotpunktes über Normal Null (NN). Dadurch ist es möglich, Landschaftsbilder so umzuwandeln, daß diese ohne weiteres mit einer Landkarte des entsprechenden Gebietes in Übereinstimmung, d.h. in Deckung, gebracht werden können. Damit ist auch für ungeübte Beobachter sichergestellt, das aufgenommene Bild zu dem entsprechenden Ausschnitt der Landkarte in Relation zu setzen und Detailinformationen einander zuzuordnen zu können.

Gemäß einer anderen Weiterbildung der Erfindung ist der Signalwandler ein Videobild-Synthetisator. Dieser baut aus den aus dem Bildspeicher ausgelesenen Bildinformationen ein kartennomiertes Bild aufund gibt dieses zur Darstellung aus.

Gemäß einer bevorzugten Weiterbildung der Erfindung ist bei Verwendung mehrerer, insbesondere spektralunterschiedlicher Kameras eine dem Bildspeicher vorgeschaltete und mit diesem verbundene Synchronisierungs- und Skalierungseinrichtung vorgesehen, welche die von den Kameras aufgenommene Bildinformation auf einen einheitlichen Abbildungsmaßstab normiert, mischt und hinsichtlich des Signaltaktes synchronisiert, wobei die Synchronisierungs- und Skalierungseinrichtung vorzugsweise die Normierung durch analoge Mittel, wie zum Beispiel eine Größenveränderung des Abtastrasters, oder durch digitale Mittel, wie zum Beispiel eine lineare Transformation der Einschreibadressen hinsichtlich einer Vergrößerung oder Verkleinerung, herbeiführt. Mit Hilfe einer solchen Einrichtung ist deshalb die Berücksichtigung unterschiedlicher Gesichtsfeldwinkel in bezug auf einen einheitlichen Abbildungsmaßstab möglich. Unterschiedliche Bildöffnungswinkel sowie verschiedene Spektralbereiche der Kameras werden berücksichtigt bzw. ausgeglichen. Dies kann auch für phasenverschobene Takte oder auch unterschiedliche Frequenzen gelten.

Vorteilhafterweise ist das kartennormierte Bild zwecks Deckung mit einer Landkarte auf eine senkrechte und nach Norden hin orientierte Blickrichtung ausgerichtet. Dadurch ist eine Übereinstimmung, d.h. eine Deckung, mit einer entsprechenden Landkarte auf einfache Weise ermöglicht.

Ausführungsbeispiele des Erfindungsgegenstandes werden nachfolgend an Hand der Zeichnung näher erläutert. Es zeigen:

Fig. 1    eine schematische, perspektivische Ansicht einer geometrischen Anordnung bei einer Luftbildaufnahme mit Hilfe eines Fluggerätes, und

Fig. 2    schematische Darstellung einer Vorrichtung zum Erzeugen kartennormierter, mittels wenigstens einer elektronischen Kamera aufgenommener Bilder.

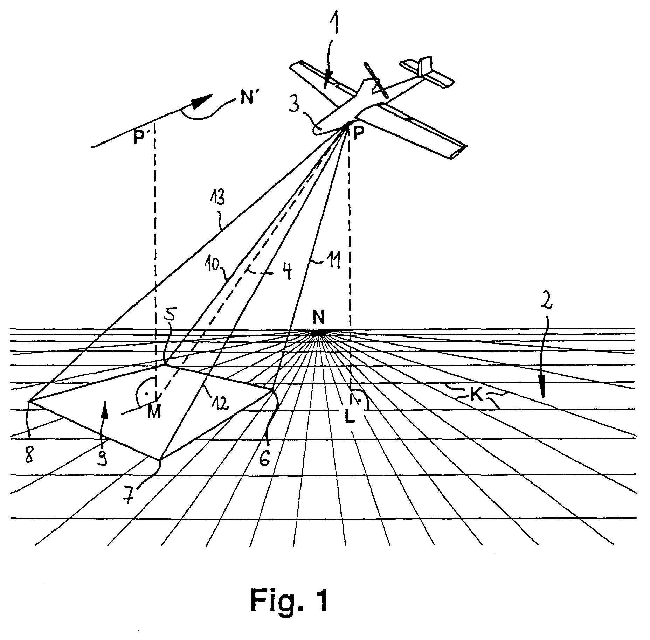

In Fig. 1 ist die geometrische Situation in einem praktischen Anwendungsfall gezeigt, in welchem Video-Luftbilder erzeugt werden.

Dazu befindet sich ein Fluggerät 1, im dargestellten Fall eine Beobachtungsdrohne, in dem Luftraum oberhalb eines aus Vereinfachungsgründen eben dargestellten Bodens 2. An der Unterseite des Fluggerätes 1 befindet sich nahe dem Bug 3 des Fluggerätes der Raumpunkt P, welcher sich senkrecht über dem am Boden angeordneten Lotpunkt L befindet. Über den Boden 2 ist ein geodätisches Koordinatennetz K gemäß einer üblichen Kartendarstellung derart gelegt, daß die Blickrichtung zum Fluchtpunkt nach Norden, also zum Punkt N, weist. Es ist demnach davon auszugehen, daß in Fig. 1 Osten rechts in der Figur, Westen links und Süden unten liegen.

Im Raumpunkt P des Fluggerätes 1 befindet sich eine aus Vereinfachungsgründen nicht näher dargestellte elektronische Videokamera, deren optische Achse 4 auf den am Boden 2 befindlichen Punkt M gerichtet ist. Das rechtwinklige Videobild entspricht am Boden 2 einem Gegenstandsfeld 9 in Gestalt eines unregelmäßigen Vierecks mit den Eckpunkten 5, 6, 7 und 8 um den Punkt M. Die Eckpunkte 5 bis 8 dieses Gegenstandfeldes sind durch Strahlen 10 bis 13 zum Raumpunkt P gekennzeichnet. Die Lage des Punktes M sowie die Größe und Orientierung des Gegenstandfeldes 9 sind festgelegt durch die aktuelle Raumlage des Fluggerätes 1 und die aktuellen Schwenkwinkel der Kamera, ferner durch den aktuellen Gesichtsfeldwinkel bzw. die aktuelle Brennweite des Objektives der Kamera. In dem dargestellten allgemeinen Fall entspricht das Videobild einer beliebigen Blickrichtung von dem Raumpunkt P des Fluggerätes zum Boden 2.

Gemäß einer bevorzugten Weiterbildung der Erfindung sind am Fluggerät 1 mehrere Kameras installiert. Die zuvor erwähnten und in Fig. 1 dargestellten geometrischen Zusammenhänge gelten für jede dieser Kameras.

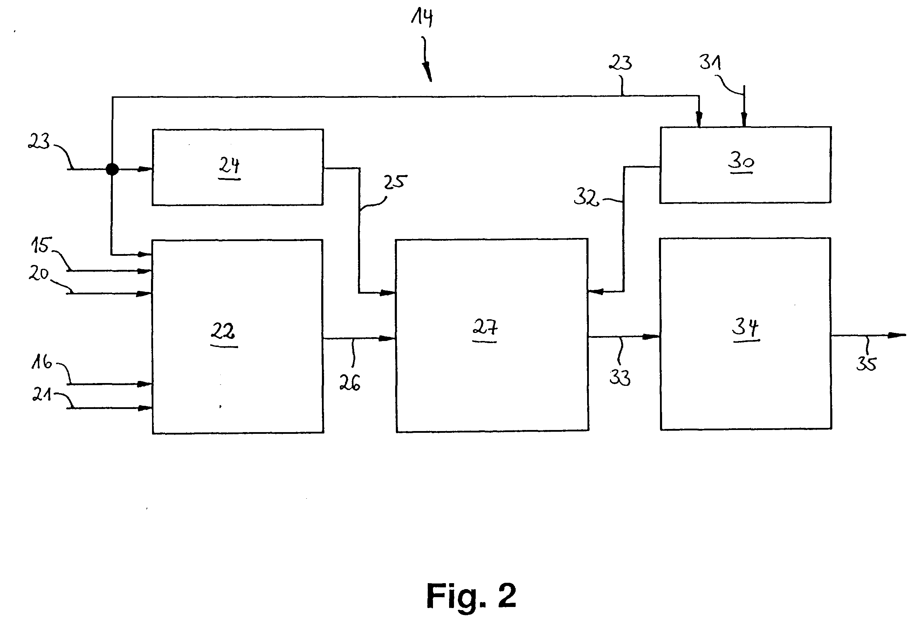

Mit Hilfe der in Fig. 2 dargestellten Vorrichtung 14 zum Erzeugen kartennormierter Bilder ist es möglich, aus den aktuell aufgenommenen Videobildern, also beispielsweise aus dem in Fig. 1 dargestellten Gegenstandsfeld 9, ein Bild herzustellen, das beispielsweise einen Blick auf das aufgenommene Gegenstandsfeld von einem Raumpunkt P' zeigt, welcher senkrecht über dem Punkt M und in gleicher Höhe über NN (Normal Null) wie der Raumpunkt P angeordnet ist, wobei die Blickrichtung ferner in Nordrichtung N' erfolgt.

In dem Ausführungsbeispiel gemäß Fig. 2 ist die erfindungsgemäße Vorrichtung 14 zum Erzeugen kartennormierter Bilder an Hand von zwei elektronischen Videokameras (nicht näher gezeigt) dargestellt, deren Video-Ausgangssignale 15, 16 und deren den jeweils aktuellen Gesichtsfeldwinkel beschreibende Signale 20, 21 mit einer Synchronisierungs- und Skalierungseinrichtung 22 verbunden sind. Diese Synchronisierungs- und Skalierungseinrichtung 22 bringt; sofern erforderlich, die Signale der beiden Kameras auf den gleichen Fernsehtakt, sie synchronisiert also beispielsweise phasenverschobene Takte und auch unterschiedliche Frequenzen der Kameras. Ferner gestattet die Einrichtung 22 eine Normierung bzw. Skalierung der Bilder der Kameras auf einen einheitlichen Abbildungsmaßstab, so daß die Bilder der einen Kamera beispielsweise vergrößert oder die Bilder der anderen Kamera verkleinert werden. Die Sychronisierungs- und Skalierungseinrichtung 22 berücksichtigt also unterschiedliche Spektralbereiche und Gesichtsfeldwinkel der am Fluggerät 1 installierten Kameras. Sofern das Bildformat des einen Kamerabildes das Bildformat des anderen Kamerabildes unterschreitet, werden die im betreffenden Bild fehlenden Randzonen schwarz ausgefüllt.

Es wird darauf hingewiesen, daß gemäß einem vereinfachten Ausführungsbeispiel, bei dem lediglich eine Kamera an dem Fluggerät installiert ist, die vorerwähnte Synchronisierungs- und Skalierungseinrichtung 22 entfällt.

Gemaß Fig. 2 ist ferner ein Signaltakt 23, beispielsweise ein Fernsehsynchronsignal, eines Taktgebers mit der Synchronisierungs- und Skalierungseinrichtung 22 verbunden.

Die erfindungsgemäße Vorrichtung 14 weist ein mit dem Signaltakt 23 versehenes Schreib-Adreßwerk 24 zum Erzeugen eines Einschreibtaktes 25 auf mit dem das synchron gemischte und skalierte Signal 26 am Ausgang der Synchronisierungs- und Skalierungseinrichtung 22 in einen Bildspeicher 27 eingeschrieben wird. Das Signal 26 enthält die aufgenommene Bildinformation in Form eines Abtastrasters.

Demnach dient das Schreib-Adreßwerk 24 dem Zuordnen der Bildinformation zu einer bestimmten Speicherstelle im Bildspeicher 27, der Einschreibtakt 25 legt zum Beispiel eine zeilenweise Ablage der Bildinformation fest.

Ferner weist die erfindungsgemäße Vorrichtung 14 ein Auslege-Adreßwerk 30 zum Auslesen der Bildinformation aus dem Bildspeicher 27 unter Berücksichtigung des Signaltaktes 23 und der geometrischen Konfigurationen, insbesondere der Raumlage und der Schwenkwinkel der Kameras, in Form eines kombinierten Signals 31 mittels eines ein geometrisch verändertes Ausleseraster aufweisenden Lesetaktes 32 auf Das Auslese-Adreßwerk 30 ist vorzugsweise ein Prozeßrechner, in den neben dem Signaltakt auch die weiteren Randbedingungen bei der Aufnahme des Bildes eingegeben werden. Das Auslese-Adreßwerk 30 wird auch als Ausleserastergenerator bezeichnet, da damit ein fernsehsynchrones Ausleseraster erzeugt wird.

Mit Hilfe des Einschreib-Adreßwerkes 24 wird die aufgenommene Bildinformation also in einer bestimmten Weise in den Bildspeicher 27 eingelesen. Das Auslese-Adreßwerk 30 dient dazu, die abgespeicherte Bildinformation in einer modifizierten Weise in Form eines geometrisch veränderten Ausleserasters, d.h. in Form einer normierten Bildinformation 33, aus dem Bildspeicher 27 auszulesen.

Ferner enthält die erfindungsgemäße Vorrichtung 14 einen Signalwandler 34, beispielsweise einen Videobild-Synthetisator, zum Umwandeln der ausgelesenen Bildinformation 33 in ein das kartennormierte Bild darstellendes Signal 35. Das Signal 35, beispielsweise ein Videosignal, enthält die für das gesuchte kartennormierte Videobild erforderliche Information, so daß eine sogenannte Kartendeckung zwischen dem letztgenannten Videobild und dem geodätischen Koordinatennetz K (vgl. Fig. 1) möglich ist.

Die mit der Kamera bzw. den Kameras aufgenommenen Bilder sind Videobilder und Abtastraster sowie Ausleseraster zeilenförmige Fernsehraster. Der Bildspeicher 27 ist ein analoger optoelektronischer Bildspeicher, zum Beispiel ein Bildwandler oder Fernseh-Normwandler, oder ein digitaler elektronischer Bildspeicher. Das Einschreiben und Auslesen der Bildinformation erfolgt im Fall eines analogen Bildspeichers durch Elektronenstrahlen, die durch elektronische oder elektromagnetische Ablenkung gemäß den Abtast-, Ausleserastern geführt sind, und im Falle eines digitalen Bildspeichers gemäß mathematischer Adreßoperationen.

Gemäß Fig. 1 nimmt die im Raumpunkt P an dem Fluggerät 1, beispielsweise einer unbemannten Beobachtungsdrohne, angeordnete Kamera Luftbilder auf Die Normierung der das Luftbild charakterisierenden Signale erfolgt mit Hilfe des Auslese-Adreßwerkes 30 unter Berücksichtigung der Raumlage des Fluggerätes 1, d.h. insbesondere des Azimut-, Nick- und des Rollwinkels, der Schwenkwinkel, also insbesondere des Längs- und Querwinkels, der Kamera relativ zum Fluggerät sowie der geodätischen Koordinaten des Raumpunks P des Fluggerätes 1 und der Höhe des Lotpunktes L über NN.

Nachfolgend wird die Arbeitsweise des Lese-Adresswerkes 30 mit Bezug auf Fig. 1 näher erläutert, wobei die nachfolgend angegebenen Winkel der besseren Übersicht halber nicht eingezeichnet sind.

Die am Fluggerät 1 im Raumpunkt P vorgesehene Kamera beobachtet unter einem Schrägwinkel $\sigma$ (Winkel MPL) gegen die Vertikale und in einer gegen die Nordrichtung N bzw. N' um einen Azimutwinkel $\alpha$ verdrehten Richtung der optischen Achse 4 (Bildsenkrechte) das Gegenstandsfeld 9 am Boden 2. Die Bildpunkte des von der Kamera aufgenommenen Originalbildes werden durch bildmitten-zentrierte, karthesische Koordinaten $x_{original}$, $y_{original}$ in dieser Bildebene, etwa der Ebene des flächenhaften elektronischen Abtastsensors, beschrieben. Die Brennweite des Objektives sei f.

Für kleine Schrägwinkel $\sigma$ erfolgt die perspektivische Entzerrung und damit eine Kartennormierung bzw. -deckung in guter Näherung durch folgende algebraische Koordinatentransformation aller Original-Bildkoordinatenpunkte $x_{original}$, $y_{original}$ in zugeordnete, wiederum bildmitten-zentrierte, korrigierte Bildkoordinatenpunkte $x_{entzerrt}$, $y_{entzerrt}$ an Hand der nachfolgenden Beziehungen:

$$y_{entzerrt} = y_{original} \cos\delta/\cos(\sigma+\delta)$$

$$x_{entzerrt} = x_{original} \, y_{entzerrt} \cos\sigma/(f \sin \delta),$$

wobei der Hilfswinkel $\delta$ die Differenz zwischen dem Mittelpunkt M des aufgenommenen Bildes und der y-Koordinate des aktuellen Bildpunktes bezeichnet und die nachfolgende Beziehung erfüllt:

$$\delta = \text{arc sin} (y_{original}/f).$$

Die im allgemeinen Fall zusätzlich erforderliche Rückdrehung des Biildes um den Azimutwinkel $\alpha$ um die Bildmitte zum Zwecke einer Nordorientierung und damit einer Kartennormierung entspricht einer weiteren algebraischen Koordinatentransformation um die Bildmitte als Ursprung. Diese erfüllt die nachfolgenden Beziehungen:

$$x_{\text{rückgedreht}} = x_{\text{entzerrt}} \cos \alpha - y_{\text{entzerrt}} \sin \alpha$$

$$y_{\text{rückgedreht}} = x_{\text{entzerrt}} \sin \alpha + y_{\text{entzerrt}} \cos \alpha.$$

Für größere Schrägwinkel $\sigma$ sind diese Näherungsgleichungen durch ehe Matrixgleichungssysteme zu ersetzen, in denen der allgemeine Fall von drei rotatorischen Freiheitsgraden des starren Körpers berücksichtigt ist. Diese perspektivischen Koordinatentransformationen gehören zum traditionellen mathematischen Fachwissen in der geometrischen Optik und der darstellenden Geometrie. Sie sind zum Beispiel beschrieben in der Druckschrift "Joachim Wernicke, Flugsichtsimulation mit Bildspeichern hoher Informationsdichte, Dissertation TU Berlin, Fakultät für Maschinenwesen, Berlin, 1969".

Wie zuvor erwähnt, ist erfindungsgemäß lediglich wenigstens eine elektronische Kamera zum Aufnehmen der gewünschten Bilder erforderlich. In dem Fall, daß lediglich eine Kamera am Fluggerät installiert ist, kann die Synchronisierungs- und Skalierungseinrichtung 22 entfallen.

Die Synchronisierungs- und Skalierungseinrichtung 22 kann die Normierung durch analoge Mittel, vorzugsweise eine Größenveränderung des Abtastrasters, oder durch digitale Mittel, vorzugsweise eine lineare Transformation der Einschreibadressen hinsichtlich einer Vergrößerung oder Verkleinerung, herbeiführen. Die einzelnen Komponenten der erfindungsgemäßen Vorrichtung 14 können in analoger, digitaler oder in hybrider Technik ausgeführt sein.

Mit Hilfe der erfindungsgemäßen Vorrichtung ist es demnach möglich, ein kartennormiertes Bild zu erhalten, das zwecks Deckung mit einer Landkarte vorzugsweise auf eine senkrechte und nach Norden hin orientierte Blickrichtung ausgerichtet ist.

**Patentansprüche**

1.  Vorrichtung zum Erzeugen kartennormierter, mittels wenigstens einer elektronischen Kamera, insbesondere einer Videokamera, aufgenommener Bilder,
    **gekennzeichnet durch**

    -   ein Schreib-Adreßwerk (24) zum Erzeugen eines Einschreibtaktes (25),

    -   einen Bildspeicher (27), in den die aufgenommene, in Form eines Abtastrasters vorliegende Bildinformation mittels des Einschreibtaktes (25) einschreibbar ist,

    -   ein Auslese-Adreßwerk (30) zum Auslesen der Bildinformation aus dem Bildspeicher (27) unter Berücksichtigung des Signaltaktes (23) und der geometrischen Konfigurationen, insbesondere der Raumlage und der Schwenkwinkel der wenigstens einen Kamera, mittels eines ein geometrisch verändertes Ausleseraster aufweisenden Lesetaktes (32), und

    -   einen Signalwandler (34) zum Unwandeln der ausgelesenen Bildinformation (33) in ein das kartennormierte Bild darstellendes Signal (35).

2.  Vorrichtung nach Anspruch 1, **dadurch gekennzeichnet**, daß die Bilder Videobilder sind und daß Abtastraster sowie Ausleseraster zeilenförmige Fernsehraster sind.

3.  Vorrichtung nach Anspruch 1 oder 2, **dadurch gekennzeichnet**, daß der Bildspeicher (27) ein analoger optoelektronischer Bildspeicher, vorzugsweise ein Bildwandler oder Fernseh-Normwandler, oder ein digitaler elektronischer Bildspeicher ist, wobei das Einschreiben und Auslesen der Bildinformation im Falle eines analogen Bildspeichers durch Elektronenstrahlen, die durch elektronische oder elektromagnetische Ablenkung gemäß den Abtast-, Ausleserastern geführt sind, und im Falle eines digitalen Bildspeichers gemäß mathematischer Adreßoperationen erfolgt.

4.  Vorrichtung nach einem der Ansprüche 1 bis 3, **dadurch gekennzeichnet,** daß die wenigstens eine Kamera an einem Fluggerät (1), vorzugsweise an einer unbemannten Beobachtungsdrohne, angebracht ist, die Bilder Luftbilder sind und das Auslesen der Bildinformation unter Berücksichtigung der Raumlage des Fluggerätes (1), insbesondere des Azimut-, Nick- und Rollwinkels, der Schwenkwinkel, insbesondere des Längs- und Querwinkels, der wenigstens einen Kamera relativ zum Fluggerät (1), der geodätischen Koordinaten des Raumpunktes (P) des Fluggerätes (1) und der Höhe des Lotpunktes (L) über Normal Null erfolgt.

5.  Vorrichtung nach einem der vorhergehenden Ansprüche, **dadurch gekennzeichnet**, daß der Signalwandler (34) ein Videobild-Synthetisator ist.

6.  Vorrichtung nach einem der vorhergehenden Ansprüche, **dadurch gekennzeichnet**, daß bei Verwendung mehrerer, insbesondere spektral unterschiedlicher Kameras eine dem Bildspeicher (27) vorgeschaltete und mit diesem verbundene Synchronisierungs- und Skalierungseinrichtung (22) vorgesehen ist, welche die von den Kameras aufgenommene Bildinformation auf einen einheitlichen Abbildungsmaßstab normiert, mischt und hinsichtlich des Signaltaktes (23) synchronisiert.

7. Vorrichtung nach Anspruch 6, **dadurch gekennzeichnet**, daß die Synchronisierungs- und Skalierungseinrichtung (22) die Normierung durch analoge Mittel, vorzugsweise eine Größenveränderung des Abtastrasters, oder durch digitale Mittel, vorzugsweise eine lineare Transformation der Einschreibadressen hinsichtlich einer Vergrößerung oder Verkleinerung, herbeiführt.

8. Vorrichtung nach einem der vorhergehenden Ansprüche, **dadurch gekennzeichnet**, daß das kartennormierte Bild zwecks Deckung mit einer Landkarte auf eine senkrechte und nach Norden hin orientierte Blickrichtung ausgerichtet ist.

**Fig. 1**

**Fig. 2**